**Europäisches Patentamt**

**European Patent Office**

**Office européen des brevets**

(11) Veröffentlichungsnummer : **0 099 471**
**B1**

(12) EUROPÄISCHE PATENTSCHRIFT

(45) Veröffentlichungstag der Patentschrift :
06.05.87

(51) Int. Cl.⁴ : **C 09 D 11/02, B 41 M 1/34**

(21) Anmeldenummer : 83105915.9

(22) Anmeldetag : 16.06.83

(54) **Verwendung eines Siebdrucköles für die Herstellung von feinen Farbrastern und reliefartigen Drucken auf keramischen Materialien.**

(30) Priorität : 30.06.82 DE 3224349

(43) Veröffentlichungstag der Anmeldung :
01.02.84 Patentblatt 84/05

(45) Bekanntmachung des Hinweises auf die Patenterteilung : 06.05.87 Patentblatt 87/19

(84) Benannte Vertragsstaaten :
DE FR GB IT

(56) Entgegenhaltungen :
AT-A- 358 604
DE-A- 1 771 265
DE-A- 2 935 421
FR-A- 2 410 031
GB-A- 2 051 678

(73) Patentinhaber : Degussa Aktiengesellschaft
Weissfrauenstrasse 9
D-6000 Frankfurt am Main 1 (DE)

(72) Erfinder : Lechthaler, Wolfgang
Fahrgasse 8
D-6000 Frankfurt am Main (DE)
Erfinder : Pfaff, Peter, Dr. Dipl.Chem.
Buchenweg 4
D-6242 Kronberg 2 (DE)
Erfinder : Völker, Werner, Dr. Dipl.Chem.
Auf dem Niederberg 45
D-6368 Bad Vilbel (DE)

## Beschreibung

Die Erfindung betrifft die Verwendung eines Siebdrucköls für die Herstellung von konturenscharfen Vielfarbendrucken auf keramischen und sonstigen Materialien, die bei Temperaturen oberhalb 400 °C mit keramischen Farben dekoriert werden, bestehend aus bekannten Bindemitteln und Zusätzen aus feinverteilten, oberhalb 400 °C rückstandslos verbrennenden, natürlichen und/oder künstlichen Wachsen und/oder feinverteilten anorganischen silikatischen und/oder oxidischen Stoffen.

Der Siebdruck ist vorwiegend zum Druck von großen, zusammenhängenden Farbflächen entwickelt worden. Dabei soll die Farboberfläche nach dem Druck gleichmäßig verlaufen. Es werden hierzu Gemische aus keramischen Farben und Siebdruckölen verwendet. Die Siebdrucköle bestehen aus Bindemitteln und Zusätzen.

Es sind viele Versuche unternommen worden, mit diesem Verfahren auch feine Raster zu drucken, insbesondere Farbbilder im trichromatischen Drei- und Vierfarbendruck.

Für das Bedrucken von Kartonagen, Plakaten, Behältern u. ä. wurden einwandfrei arbeitende Kaltfarben entwickelt. Kaltfarben sind Farben, die bis maximal 200 °C erwärmt werden und bei denen das organische Bindemittel des Farbkörpers den endgültigen Überzug bildet.

Keramische Farben setzen sich im wesentlichen aus keramischen Farbpigmenten und Flußmitteln zusammen. Im Gegensatz zu den Kaltfarben verbrennen die sonstigen organischen Auftragshilfsmittel, mit denen die keramischen Farben auf keramische Oberflächen aufgebracht werden, beim Dekorbrand bei Temperaturen zwischen 400 und 1 400 °C völlig und es bildet sich ein farbiger, glasiger Überzug. Das einwandfreie, restlose Verbrennen schränkt die Anwendung von organischen Bindemitteln und verlaufshemmenden Stellmitteln bzw. Zusätzen in den Siebdruckölen beim Siebdruck erheblich ein. Es wurde bis heute kein für keramische Farben geeignetes Siebdrucköl gefunden, das bei feinen Rasterpunkten konturenscharfe, nicht auslaufende Drucke ergibt. Viele Versuche, die auf fotografischem Wege leicht herstellbaren Vierfarbauszüge mit beim Buch- und Illustriertendruck üblichen Rastern auch für den keramischen Siebdruck zu nutzen, scheitern daran, daß die für den Vierfarbdruck unbedingt erforderliche Reproduzierbarkeit der Größe der Rasterpunkte aufgrund der Fließeigenschaften der Siebdruckfarbpaste nicht erreicht wurde.

So laufen die feinen, spitzen Punkte (bei 5-10 %iger Deckung) beim Druck breit, ebenso laufen die feinen Zwischenräume bei mehr als 60 % Deckung zu. Da aber das Neben- und Übereinander von Farben beim trichromatischen Vierfarbdruck ausschlaggebend ist, benötigt man eine Siebdruckpaste, die nach dem Druck konturenscharf stehenbleibt.

Ähnliche Probleme wie bei den feinen Rasterpunkten ergeben sich auch bei reliefartig aufgetragenen Farben. Üblicherweise verlaufen reliefartig gedruckte Farben nach dem Druck, da normalerweise die für einen technisch durchführbaren Siebdruck erforderliche Siebdruckpaste nach dem Druck stark verläuft und in den üblichen Schrägtrocknern abläuft. Man benötigt jedoch Öle für die Druckpasten, die bei hohen Scherkräften (beim Druck) gut fließen, aber bei niedrigen Scherkräften (nach dem Druck) konturenscharf stehenbleiben.

Aus der DE-A-1 771 265 ist eine thermoplastische Druckfarbe bekannt, insbesondere zum Herstellen elektrisch leitfähiger Schichten, die rückstandslos verbrennende natürliche und/oder künstliche Wachse und/oder oxidische Stoffe im Größenbereich von 5 bis 30 μm enthält. Diese Druckfarben werden oberhalb des Schmelzpunktes der Wachse auf die Unterlage aufgebracht und ergeben eine gleichmäßige Schicht ohne scharfe Rasterpunkte. Zum Drucken von Vielfarbendrucken sind diese Druckpasten nicht geeignet.

Das gleiche gilt auch für Siebdrucktinten, wie sie in der DE-A-2 934 421 und in der FR-A-2 410-031 beschrieben werden. Diese enthalten zwar feinverteiltes Aluminiumoxid bzw. feinverteilte Wachse, sind jedoch nicht thixotrop und daher für einen Vielfarbendruck nicht geeignet.

Es war daher Aufgabe der vorliegenden Erfindung, ein Siebdrucköl für die Herstellung von konturenscharfen Vielfarbendrucken auf keramischen und sonstigen Materialien, die bei Temperaturen oberhalb 400 °C mit keramischen Farben dekoriert werden, zu schaffen, bestehend aus bekannten Bindemitteln und Zusätzen aus feinverteilten, oberhalb 400 °C rückstandslos verbrennenden, natürlichen und/oder künstlichen Wachsen und/oder feinverteilten anorganischen silikatischen und/oder oxidischen Stoffen, das ein Verlaufen der Farbpasten nach dem Druck bei Raumtemperatur verhindert und konturenscharfe Drucke ergibt.

Diese Aufgabe wurde erfindungsgemäß durch die Verwendung von Wachsen mit Teilchengrößen von weniger als 5 μm und anorganischen Stoffen mit Teilchengrößen von weniger als 5 μm, die beim Brennen in das silikatische Gerüst des Flußmittels der keramischen Farbe einbaufähig sind.

Die feinverteilten Zusätze an Wachsen und/oder anorganischen Stoffen werden normalerweise in Mengen von 0,2 bis 15 Gew.-%, vorzugsweise 2 bis 8 Gew.-%, dem Bindemittel zugesetzt.

Durch die Kombination von bekannten für den keramischen Druck verwendeten Bindemitteln, wie Polymethacrylaten, Celluloseestern und -äthern, modifizierten Naturharzen und Fetten, Weichmachern, Weichharzen und Lösungsmitteln, mit feinverteilten natürlichen und künstlichen Wachsen, wie vorzugsweise Rizinusöle oder Poly- äthylenwachse, werden Siebdrucköle erhalten, die die erforderlichen Vorraussetzungen für den Druck von keramischen Rasterdekoren voll erfüllen. Für Hochtemperaturdekore lassen sich statt der mikrofeinen Wachse auch feinverteilte anorganische Materialien einsetzen, vorteilhafterweise pyrogene und gefällte Kieselsäure, Silikate, Titanoxid, Eisenoxid, Aluminiumoxid, Bentonite, kaolin- und asbestartige Stoffe, die beim Brand in das silikatische Gerüst des Flußmittels aufgenommen werden.

Wegen der hohen Passergenauigkeit wird es nur in seltenen Fällen möglich sein, direkt auf die keramische Oberfläche zu drucken oder den Siebdruck mittels Zwischenträger (Gelatine- oder Silikonmembran bzw. -tampon) zu übertragen. Die beste Druckgenauigkeit erreicht man mit dem in der Keramik weit verbreiteten Abziehbildverfahren.

Folgende Beispiele sollen das Arbeiten mit den erfindungsgemäßen Siebdruckölen näher erläutern :

1. Zum Druck von Glasfarbenbildern wurden bekannte keramische Farbpigmente, wie Kobalt-Spinelle, Cadmiumsulfid-Gelb oder Kupferchromite, in Mengen von 10 bis 15 Gew.-% mit einem Glasfluß versetzt, der aus ca. 65 % PbO, 12 % $B_2O_3$, 14 % $SiO_2$ und 9 % Alkali/Erdalkalioxid bestand, und mit einem Siebdrucköl angepastet, das zuvor durch Vermischen von 97 Gewichtsteilen eines Bindemittels aus 45 % Polymethacrylat in einem Lösungsmittel (Leichtbenzin) und 3 Gewichtsteilen eines handelsüblichen gehärteten Rizinusöles mittels eines schnellaufenden Rührers hergestellt worden war. Die entsprechenden Farbpasten wurden vor dem Druck auf einer Dreiwalze homogenisiert. Das gehärtete Rizinusöl hatte eine Teilchengröße von weniger als 5 µm.

Der Druck erfolgte mit Polyestergewebe (120 Fäden/cm) auf Abziehbilderpapier mit einem Vierfarbenauszug (60er-Raster). Nach Überfilmen erfolgte der Überzug wie üblich auf Glas. Das Bild wurde bei 550 °C eingebrannt.

Um einen besseren Kontrast zu erzielen, empfiehlt es sich, Weiß als Fläche unterzudrucken.

Man erhält hierbei einen einwandfreien Vierfarbendruck, ohne ein Zusammenlaufen der Farben.

2. Vier verschiedenfarbige Pigmente (Kobalt-Chrom-Spinell, Blei-Antimon-Farbkörper, Kobalt-Chrom-Eisen-Farbkörper) wurden mit einem Glasfluß aus 45 % $SiO_2$, 25 % PbO, 13 % $B_2O_3$, 7 % $Al_2O_3$ und 10 % Alkali-/Erdalkalioxid versetzt und mit einem Siebdrucköl angepastet, das aus 95 % eines Bindemittels (40 % Polymethacrylat in Leichtbenzin) und 5 % eines handelsüblichen gehärteten Rizinusöles bestand. Es wurde wie in Beispiel 1 gedruckt, übertragen und bei 820 °C gebrannt. Man erhält auch hier, wie bei allen folgenden Beispielen, einen einwandfreien Vierfarbendruck.

3. Aus vier Unterglasurfarben wurde ein Abziehbild mit einem Siebdrucköl gedruckt, das durch Mischen von 99 Gewichtsteilen eines Bindemittels aus 30 % Polymethacrylat in Leichtbenzin und 1 Gewichtsteil pyrogenes Siliziumdioxid (Aerosil) hergestellt war.

Nach dem Übertrag auf einen mit einem Fixativ behandelten, geschrühten Steingutscherben wurde das Abziehbild bei 900 °C verglüht, mit einer bleihaltigen, pinkfreundlichen Glasur überspritzt und bei 1 020 °C gebrannt.

4. Mit der gleichen Folge von Unterglasurfarben wurde ein Dekor auf eine Silikonmembrane gedruckt und Farbe für Farbe von dieser auf einen geschrühten Steingutteller übertragen. Zur Erzielung eines einwandfreien Druckes wurden Stahlgewebeschablonen verwandt.

Als Druckmedium wurde ein Siebdrucköl folgender Zusammensetzung benutzt : 54 Gewichtsteile Cumaron-Indenharz (F. P. 75 °C), 43,5 Gewichtsteile Trimethylbenzol und 2,5 Gewichtsteile eines mit organischen Aminen modifizierten Bentonits.

Nach dem Verglühen des Druckmediums wurde wie oben glasiert und gebrannt.

Mit dem gleichen Medium wurden mit der gleichen Umdruckeinrichtung auch Porzellanteller mit obigen Aufglasurfarben bedruckt. Der Brand erfolgte bei 820 °C.

5. In der Baukeramik sind seit kurzem Dekore üblich, bei denen die Farben relieffartig aufgetragen werden. Mangels brauchbarer Druckverfahren wird die Farbe bisher von Hand aufgetragen. Ein Blütendekor wurde folgendermaßen mit entsprechenden Pigmenten gedruckt : Stengel und Blätter lindgrün, Staubfäden und Konturen hellbraun und die Blüten mit einer weißen Relieffarbe.

Als Siebdrucköl wurde folgende Mischung verwendet : 11 Gewichtsteile Äthylcellulose, 86,5 Gewichtsteile Butyllaktat und 2,5 Gewichtsteile Polyäthylenglykol (M ~ 100 000, Teilchengröße 0,3-1,5 µm).

6. Ein weiteres Siebdrucköl, das für Dekore in der Baukeramik gemäß Beispiel 5 verwendet wurde, bestand aus : 19 Gewichtsteilen Nitrocellulose, 52 Gewichtsteilen Diacetonalkohol, 28 Gewichtsteilen 2-Äthylhexylacetat und 1 Gewichtsteil Zirkogel (gefälltes Zirkoniumoxidhydrat).

**Patentansprüche**

1. Verwendung eines Siebdrucköls, bestehend aus bekannten Bindemitteln und Zusätzen aus feinverteilten, oberhalb 400 °C rückstandslos verbrennenden, natürlichen und/oder künstlichen Wachsen mit Teilchengrößen von weniger als 5 µm und/oder feinverteilten anorganischen silikatischen und/oder oxidischen Stoffen mit Teilchengrößen von weniger als 5 µm, die beim Brennen in das silikatische Gerüst des Flußmittels der keramischen Farbe einbaufähig sind, für die Herstellung von konturenscharfen Vielfarbendrucken auf keramischen und sonstigen Materialien, die bei Temperaturen oberhalb 400 °C mit keramischen Farben dekoriert werden.

2. Verwendung eines Siebdrucköls nach Anspruch 1, bei dem die Menge der Zusätze 0,2 bis 15 Gew.-% beträgt.

3. Verwendung eines Siebdrucköls nach Anspruch 1 und 2, bei dem die Menge der Zusätze 2 bis 8 Gew.%, Rest Bindemittel, beträgt.

4. Verwendung eines Siebdrucköls nach Anspruch 1 bis 3, bei dem als feinverteilte Zusätze gehärtetes Rizinusöl, wachsartige Polyäthylene, Kieselsäure, Titanoxid, Eisenoxid, Aluminiumoxid, Bentonite, Kaoline und Asbeste verwendet werden.

5. Verwendung eines Siebdrucköls nach Anspruch 1 bis 4, bei dem als Bindemittel Polymethacrylate, Celluloseester und -äther in Lösungsmitteln verwendet werden.

## Claims

1. Use of a screen printing oil composed of known binders and additives of finely divided natural and/or synthetic waxes with particle sizes of less than 5 μm and which burn without residue above 400 °C, and/or finely divided inorganic silicic and/or oxidic substances, with particle sizes of less than 5 μm, which can be incorporated into the silicic framework of the flux of the ceramic pigment during combustion, for the production of well-defined multicoloured prints on ceramic and other materials which are decorated with ceramic pigments at temperatures above 400 °C.

2. Use of a screen printing oil according to claim 1, in which the quantity of additives is from 0.2 to 15 % by weight.

3. Use of a screen printing oil according to claims 1 and 2, in which the quantity of additives is from 2 to 8 % by weight, the remainder comprising the binders.

4. Use of a screen printing oil according to claims 1 to 3, in which hardened castor oil, wax-like polyethylenes, silica, titanium oxide, iron oxide, aluminium oxide, bentonites, kaolins and asbestos are used as finely divided additives.

5. Use of a screen printing oil according to claims 1 to 4, in which polymethacrylates, cellulose esters and ethers in solvents are used as binders.

## Revendications

1. Utilisation d'une huile sérigraphique, composée de liants connus et d'additifs constitués de résines naturelles ou synthétiques finement divisées, à cuisson sans résidu au-dessus de 400 °C, à tailles de particules inférieures à 5 μm et/ou de substances inorganiques finement divisées, siliceuses et/ou de type oxyde, à tailles de particules inférieures à 5 μm, qui sont incorporables lors de la cuisson, dans le squelette siliceux du fondant de la couleur céramique, pour l'obtention d'impression polychromes à contours nets sur des céramiques et d'autres matériaux qui sont décorés avec des couleurs céramiques à des températures supérieures à 400 °C.

2. Utilisation d'une huile sérigraphique selon la revendication 1, dans laquelle la quantité des additifs va de 0,2 à 15 % en poids.

3. Utilisation d'une huile sérigraphique selon les revendications 1 et 2, dans laquelle la quantité des additifs va de 2 à 8 % en poids, le reste étant constitué de liant.

4. Utilisation d'une huile sérigraphique selon les revendications 1 à 3, dans laquelle on utilise comme additifs finement divisés de l'huile de ricin solidifiée, des polyéthylènes cireux, de l'acide silicique, de l'oxyde de titane, de l'oxyde de fer, de l'oxyde d'aluminium, des bentonites, des kaolins et des amiantes.

5. Utilisation d'une huile sérigraphique selon les revendications 1 à 4, dans laquelle on utilise comme liant des polyméthacrylates, des éthers et des esters de cellulose dans des solvants.